# EUROPEAN PATENT APPLICATION

(11) **EP 0 635 540 A1**
(43) Date of publication of application: **25.01.1995**
(21) Application number: 94304916.3
(22) Date of filing: 05.07.1994
(51) Int. Cl.: C08K 5/524

(54) **Phosphite blends**

(30) Priority: 22.07.1993 US 96150
(71) Applicant: GENERAL ELECTRIC COMPANY, Schenectady, NY 12345 (US)
(72) Inventor: Gray, Carloss L., Belpre, Ohio 45714 (US); Mahood, James A., Parkersburgh, West Virginia 26101 (US)
(74) Representative: Pratt, Richard Wilson

(57) **Abstract**

A free-flowing solid comprising a tetrahydroabietyl phosphite is provided. The solid maintains its free-flowing character over extended periods of time. The solid is useful as a thermal oxidative stabilizer additive for thermoplastic compositions and because of its free-flowing character, may be easily used in conventional manufacturing processes.

## Description

The present invention relates to tetrahydroabietyl phosphites and more particularly relates to free flowing solid particulates comprising tetrahydroabietyl phosphites.

### Description of the Related Art

Thermoplastic compositions are known to exhibit degradation upon exposure to oxygen at elevated temperatures during molding processes and upon exposure to ultraviolet light when used in the sunlight. Various additives have been used in thermoplastic compositions to combat these problems, including hindered phenolic compounds as primary antioxidant, hindered amine compounds as light stabilizers and organic phosphite as secondary antioxidant. One such class of organic phosphites is the tetrahydroabietyl phosphite which is set out in Enlow U.S. Patent 5,214,472 issued June 23, 1992, and U.S. Patent, Enlow 5,141,975 issued August 25, 1992 and Enlow U.S. 5,142,083 issued August 25, 1992, all of which are incorporated herein by reference. Such tetrahydroabietyl phosphites can exhibit poor handling properties. For example, tris (tetrahydroabietyl) phosphite when made into free-flowing powdered form loses its free-flowing character within two days at room temperature, and becomes largely coalesced within five days at room temperature, thereby making the phosphite inconvenient to use and handle as an additive for thermoplastic compositions.

Consequently, there is a need for tetrahydroabietyl phosphites which when in particulate form will retain their free-flowing character for extended periods of time.

### Summary of the Invention

The present invention provides tetrahydroabietyl phosphites in free-flowing solid particulates which retain their free-flowing character over an extended period of time at room temperature. The particulates are formed from an admixture of a tetrahydroabietyl phosphite and a material selected from the group consisting of hindered phenolic compounds, hindered amine compounds, organic phosphite compounds and mixtures thereof, wherein the material has a melting temperature of greater than 40°C. The particulate may be formed and then stored and then blended with a thermoplastic resin to provide a stabilized thermoplastic composition.

### Detailed Description of the Invention

The free-flowing solid compositions of the present invention comprise organic phosphite particulates which are preferably present in the composition at a level of 10 to 100 percent by weight of the compositions, more preferably at a level of from 50 to 100 percent by weight of the compositions, and most preferably a level of from 95 to 100 percent by weight of the composition. The solid composition may further comprise particles made from additives including, for example, phosphites, phenolic antioxidants and hindered amine stabilizers. The term solid is meant to distinguish the compositions from liquid compositions at room temperature (23°C). The particulates and particles may be in any free-flowing solid form suitable for material handling, including powders, flakes and pellets. In powdered form the particulates preferably have a number average size of from .50mm to 1mm. In flake form the flakes preferably have a number average weight of from .005 to .05 grams, and in pellet form the pellets preferably have a number average weight of from between .01 and .05 grams.

The organic phosphite particulates are formed from an admixture of the tetrahydroabietyl phosphite and a solid stabilizer material selected from the group consisting of hindered phenolic compounds, hindered amine compounds, solid organic phosphites different from the tetrahydroabietyl phosphite and mixtures thereof. Preferably the tetrahydroabietyl phosphite is present in the admixture at a level of between 5 to 95 percent by weight based on the total weight of the particulates, more preferably from 20 to 80 percent by weight thereof, and most preferably from 30 to 60 percent by weight thereof. Preferably the solid stabilizer material is present at a level of from 5 to 95 percent by weight based on the total weight of the particulates, more preferably from 20 to 80 percent by weight thereof, and most preferably from 40 to 70 percent by weight thereof. Additional ingredients may be present at a level of from 0 to 80 percent by weight of the particulate, optionally from 1 to 50 percent by weight thereof, and also optionally 1 to 10 weight percent thereof. The material has a melting point greater than 40°C, preferably greater than 75°C, and more preferably between 100°C and 250°C.

The tetrahydroabietyl phosphites may be synthesized by the transesterification of triphenyl phosphite with an excess of a crude, tetrahydroabietyl alcohol, more specifically a product designated Abitol® alcohol available from Hercules, Inc. Other synthesis techniques may also be used.

Abitol® alcohol is a commercial product containing about 80% tetrahydroabietyl alcohol with the remainder being mixture of organic materials, some very complex and difficult to identify chemically. It is made by hydrogenating the rosin acids portion from crude, tall oil fatty acid, the major portion of which is abietic acid. The manufacturer of the crude product provides a hydroxyl number which translates to an apparent molecular weight by hydroxyl equivalence. The apparent molecular weight for the Abitol® product used in the examples was 365.

A wide array of products may be prepared in accordance with transesterification techniques. One large class would be phosphite esters based on tetrahydroabietyl alcohol (THAA) transesterfied with phenyl or substituted phenyl phosphites. The reaction with various sterically hindered phenols in the ortho position would be preferred, such as 2-tert-alkyl phenol, 2-sec-alkyl phenol, 2,6-di-sec-alkyl phenol and 2-tert-alky-6-n-alkyl phenol. Additionally, use may be made of phenols such as o-nonylated or p-nonylated phenols, all of the above being made by transesterifying triphenyl phosphite.

Additional sterically hindered phenols include compositions such as 2,6 di-tert-butyl 4-Z substituted phenols where Z is alkyl, alkoxy, carboxy, alkyaryl, aryl, aralkyl or virtually any substituent group. The 2,6 di-tert-butyl 4-Z substituted phenol may be reacted with PCl₃ to produce the dichloride phosphite. One mol of the latter may then be reacted with two mols of Abitol® and 2 mols of triethyl amine as the acid receptor resulting in the bis tetrahydroabietyl (2,6-di-tert-butyl-4-Z-phenyl) phosphite.

Tetrahydroabietyl alcohol has the structure:

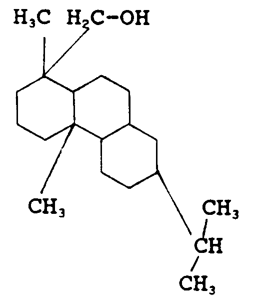

Tris tetrahydroabietyl phosphite has the structure:

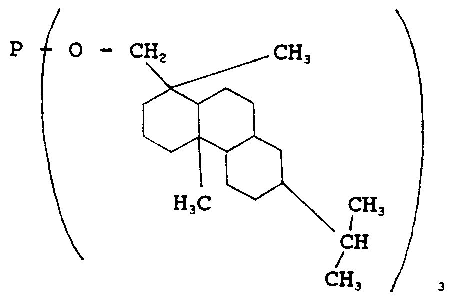

The following are mentioned as examples of hindered phenolic compounds:
1. Single 2,6-dialkylphenols, such as 2,6-di-tert.-butyl-4-methylphenol, 2,6-di-tert.-butyl-4-methoxymethylphenol or 2,6-di-tert,-butyl-4-methoxyphenol.
2. Bisphenols, such as 2,2'-methylene-bis-(6-tert.-butyl-4-methylphenol), 2,2'-methylenebis-(6-tert.-butyl-4-ethylphenol), 2,2'-methylene-bis-(4-methyl-6-(α-methylcyclohexyl)-phenol) 1,1-bis-(5-tert.-butyl-4-hydroxy-2-methylphenyl)-butane, 2,2-bis-(5-tert.-butyl-4-hydroxy-2-methylphenyl)-butane, 2,2-bis-(3,5-di-tert.butyl-4-hydroxyphenyl)-propane, 1,1,3-tris-(5-tert.butyl-4-hydroxy-2-methylphenyl)-butane, 2,2-bis-(5-tert.-butyl-4-hydroxy-2-methylphenyl)-4-n-dodecylmercapto-butane, 1,1,5,5-tetra-(5-tert.-butyl-4-hydroxy-2-methylphenyl)-pentane, ethylene glycol-bis (3,3-bis-(3'-tert.-butyl-4'-hydroxyphenyl)-butyrate), 1,1-bis-(3,5-dimethyl-2-hydroxyphenyl)-3-(n-dodecylthio)-butane, or 4,4'-thio-bis(6-tert.-butyl-3-methylphenol).
3. Hydroxybenzyl aromates, such as 1,3,5-tri-(3,5-di-tert.-butyl-4-hydroxybenzyl)-2,4,6-trimethylbenzene, 2,2-bis-(3,5-di-tert.-butyl-4-hydroxybenzyl)-malonic acid-dioctadecyl ester, 1,3,5-tris-(3,5-di-tert.-butyl-4-hydroxybenzyl)-isocyanurate, or 3,5-di-tert.-butyl-4-hydroxybenzyl-phosphonic acid-diethyl ester.
4. Amides of β-(3,5-di-tert.-butyl-4-hydroxyphenyl)-propionic acid, such as 1,3,5-tris-(3,5-di-tert.-butyl-4-hydroxyphenylpropionyl)-hexahydro-s-triazine, N,N'-di(3,5-di-tert.-butyl-4-hydroxyphenyl-propionyl)-hexamethylenediamine.
5. Esters of β-(3,5-di-tert.-butyl-4-hydroxyphenyl)-propionic acid with mono- or polyvalent alcohols, such as with methanol, octadecanol, 1,6-hexanediol, ethylene glycol, thiodiethylene glycol, neopentyl glycol, pentaerythritol, tri-hydroxyethyl-isocyanurate.
6. Spiro compounds, such as diphenolic spiro-diacetals or spiro-diketals, such as 2,4,8,10-tetraoxaspiro-(5,5)-undecane substituted in the 3- and 9-position with phenolic radicals, such as 3,9-bis-(3,5-di-tert.-butyl-4-hydroxyphenyl)-2,4,8,10-tetraoxaspiro-(5,5)-undecane, 3,9-bis-[1,1-dimethyl-2-(3,5-di-tert-butyl-4-hydroxyphenyl)-ethyl]-2,4,8,10-tetraoxaspiro-(5,5)-undecane.

Preferred hindered phenolic compounds are:
1,3,5-tri-(3,5-di-tert.-butyl-4-hydroxybenzyl)-2,4,6-trimethylbenzene,
pentaerythritol-tetra(3-(3,5-di-tert.-butyl-4-hydroxyphenyl)-propionate)
β-(3,5-di-tert.-butyl-4-hydroxyphenyl)-propionic acid-n-octadecyl ester,
thiodiethylene glycol-β-(4-hydroxy-3,5-di-tert.-butyl-phenyl)-propionate,
2,6-di-tert.-butyl-4-methyl-phenol, and
3,9-bis(1,1-dimethyl-2-(3,5-di-tert.-butyl-4-hydroxyphenyl)-ethyl)-2,4,8,10-tetraoxaspiro-(5,5)-undecane.

The preferred hindered phenolic compounds contemplated herein are those embraced by the structural formula: 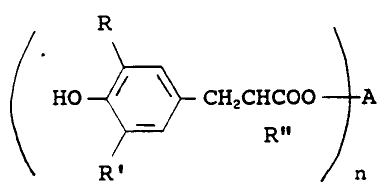
where R and R' are lower alkyl, i.e., alkyl of 1-10 carbon atoms, R'' is lower alkyl or hydrogen, n is 1-4, and A is the residue of an alkanol or alkane polyol. Illustrative examples of A include: 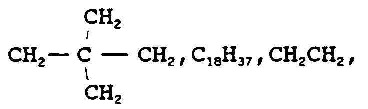
CH₂CHCH₂ and 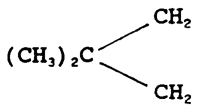
A contains 2-24 carbon atoms. Preferably, A is C₁₈H₃₇.

The hindered amine compounds are preferably selected from the group consisting of piperidinyl compounds. Suitable piperidinyl compounds are set out below.

A piperidinyl compound having the formula: 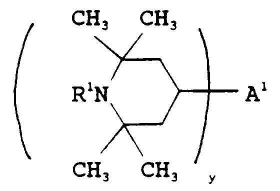
where R¹ is alkyl of 1-4 carbon atoms or hydrogen, y is 1-4 and A¹ is an organic radical or a phosphorus acid residue.

A piperidinyl compound having the formula: 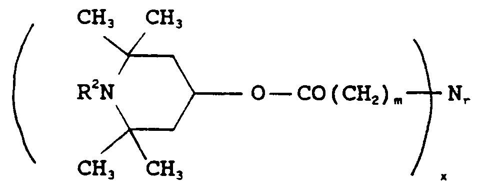
where R² is alkyl of 1-4 carbon atoms or hydrogen, m is 1-4, x is 2-3 and r is 0 or 1.

It will be noted that the above piperidinyl compound may comprise three substituted piperidinyl groups bound to one another through a nitrogen atom, as well as one where two substituted piperidinyl groups are bound to one another through the residue of an aliphatic dicarboxylic acid. In the first instance, such a compound may be prepared by the reaction of a lower alkyl ester of a tricarboxylic acid having the formula:

N((CH₂)ₘCOOH)₃

where m is 1-4, with 4-hydroxy-2,2,6,6-tetramethylpiperidine.

In the other instance, the piperidinyl compound of the invention may be prepared by reaction of a di(lower)alkyl dicarboxylate with the 4-hydroxy-2,2,6,6-tetramethylpiperidine. Illustrative di-(lower)alkyl dicarboxylates include dimethyl and diethyl, glutarates, suberates, sebacates, adipates and pimelates. The methods of preparation shown in the above Murayama et al patents are suitable here.

Preferred piperidyl compounds include bis-(2,2,6,6-tetramethyl-4-piperidyl)sebacate and tris(2,2,6,6-tetramethyl-4-piperidyl)nitriloacetate.

The benzotriazole compounds are preferably 2-hydroxyphenyl benzotriazoles.

The 2-hydroxyphenylbenzotriazoles contemplated herein are those which conform to the structural formula: 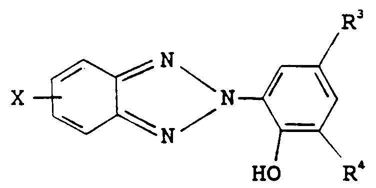
wherein R³ is lower alkyl or halogen (preferably chlorine), R⁴ is lower alkyl, halogen (preferably chlorine) or hydrogen, and X is chlorine or hydrogen.

Illustrative examples of such 2-hydroxyphenylbenzotriazoles include 2(2'-hydroxy-3',5'-divertiarybutylphenyl)5-chlorobenzotriazole (Tinuvin 327), 2-(2'-hydroxy-3',5'-dimethylphenyl)benzotriazole, 2-(2'-hydroxy-5'-tertiarybutylphenyl)benzotriazole, 2-(2'-hydroxy-5'amylphenyl)5-chlorobenzotriazole, 2-(2'-hydroxy-3'-tertiarybutyl-5'-methylphenyl)benzotriazole (Tinuvin 326), 2-(2'-hydroxy-5-methylphenyl)-benzotriazole (Tinuvin P), 2-(2'-hydroxy-3',5'-dimethylphenyl)5-chlorobenzotriazole,2-(2'-hydroxy-3',5'ditertiaryoctylphenyl)benzotriazole (Tinuvin 328), 2-(2'-hydroxy-3',5'-dichloroplenyl)benzotriazole, and 2-(2'-hydroxy-3'-methyl-5'-tertiaryoctylphenyl)benzotriazole. The term "lower alkyl" denotes an alkyl group having 1-10 carbon atoms.

Many of the benzotriazoles of this invention are available under the trademark designation Tinuvin 326, Tinuvin 327, Tinuvin 328, Tinuvin P, etc. They may be prepared by coupling an aromatic diazo compound with an aromatic amine, followed by oxidation of the coupled intermediate. An illustrative preparation is as follows: 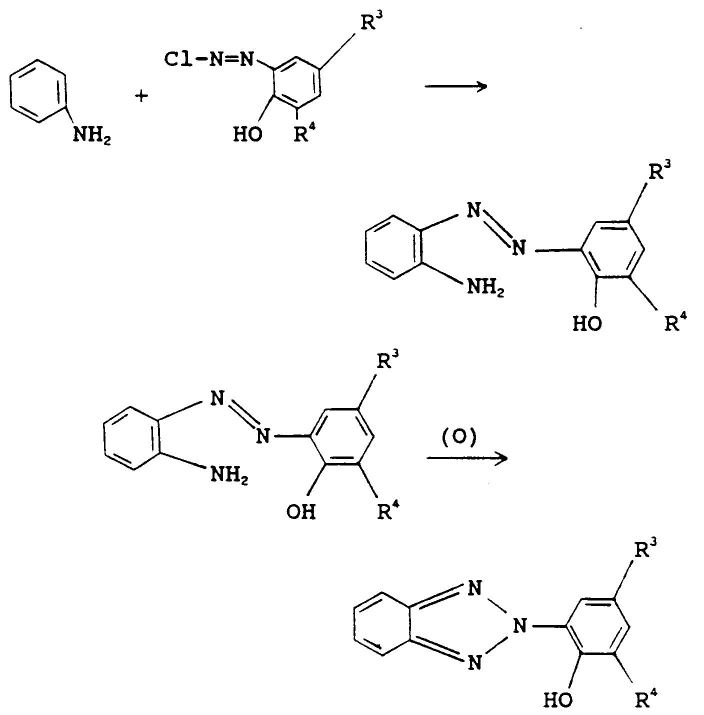
Other methods of preparation are set out in U.S. Pat. No. 3,004,896 (Heller et al.) and U.S. Pat. No. 3,189,615 (Heller et al.).

The admixture may comprise amounts of solid organic phosphite compounds different from the tetrahydroabietyl phosphite such as pentaerythritol diphosphites including dialkyl pentaerythritol diphosphites such as distearylpentaerythritol diphosphite and diaryl pentaerythritol diphosphites such as bis(2,4-di-t-butyl) pentaerythritol diphosphite. Suitable solid phosphites for blending with the tetrahydroabietyl phosphite include those set out below.

A class of these solid organic phosphite compounds may be defined by means of the general formula: 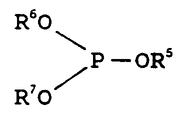
wherein: R⁵, R⁶ and R⁷ represent either equal or different hydrocarbyl radicals, which can be either substituted or non-substituted alkyl, cycloalkyl, aryl, alkaryl or aralkyl radicals.

In particular, trialkyl phosphites, dialkyl monophenyl phosphites, diphenyl monoalkyl phosphites and triphenyl phosphites, possibly bearing hydrocarbyl substituents on the benzene ring, are known and used in the art.

Specific examples of such organic phosphite compounds are: tris(2,5-di-tert.-butylphenyl)phosphite, tris(2-tert.-butylphenyl)phosphite, tris(2-phenylphenyl)phosphite, tris(2-(1,1-dimethylpropyl)phenyl)phosphite, tris(2-cyclohexylphenyl)phosphite, tris(2-tert.-butyl-4-phenylphenyl)phosphite, tris(2-tert.-butyl-4-methylphenyl)phosphite, tris(2,4-di-tert.-amylphenyl) phosphite and tris(2,4-di-tert.-butylphenyl) phosphite.

Another class of organic phosphite compounds which can be employed in the admixture include those defined by the general formula: 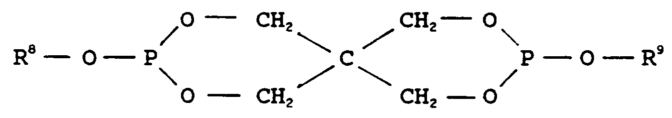
wherein: R⁸ and R⁹ radicals, equal to, or different from, each other, represent hydrocarbyl radicals, which can be either substituted or non-substituted alkyl, cycloalkyl, aryl, alkaryl or aralkyl radicals.

Specific examples of such organic phosphites are: bis(2,4-di-tert.-butylphenyl)pentaerythritol diphosphite and distearyl pentaerythritol diphosphite.

The admixture may also contain amounts of an aliphatic amine such as triisopropyl amine to improve the hydrolytic stability of the admixture. The admixture may be obtained by room temperature mixing or by melt mixing or by solution blending.

The free flowing solid phosphite composition can be used to improve the stability of thermoplastic compositions, and may be blended with thermoplastic resins to provide the stabilized thermoplastic compositions. The solid phosphite compositions are preferably used in the thermoplastic compositions at levels of from 0.005 to 0.5 percent by weight based on the total weight of the thermoplastic composition, more preferably at a level of from 0.01 to 0.2 percent by weight thereof, and most preferably at a level of from 0.05 to 0.1 percent by weight thereof.

Suitably thermoplastic resins include any of the polymers known in the art, such as polyesters, polyurethanes, polyalkylene terephthalates, polysulfones, polyimides, polyphenylene ethers, styrenic polymers, polycarbonates, acrylic polymers, polyamides, polyacetals, halide containing polymers and polyolefin homopolymers and copolymers. Mixtures of different polymers, such as polyphenylene ether/styrenic resin blends, polyvinylchloride/ABS or other impact modified polymers, such as methacrylonitrile and alphamethylstyrene containing ABS, and polyester/ABS or polycarbonate/ABS and polyester plus some other impact modifier may also be used. Such polymers are available commercially or may be made by means well known in the art. However, the organic phosphite particulates of the invention are particularly useful in thermoplastic polymers, such as polyolefins, polycarbonates, polyesters, polyphenylene ethers and styrenic polymers, due to the extreme temperatures at which thermoplastic polymers are often processed and/or used.

Polymers of monoolefins and diolefins, for example polypropylene, polyisobutylene, polybutene-1, polymethylpentene-1, polyisoprene or polybutadiene, as well as polymers of cycloolefins, for instance of cyclopentene or norbornene, polyethylene (which optionally can be crosslinked), for example high density polyethylene (HDPE), low density polyethylene (LDPE) and linear low density polyethylene (LLDPE) may be used. Mixtures of these polymers, for example, mixtures of polypropylene with polyisobutylene, polypropylene with polyethylene (for example PP/HDPE, PP/LDPE) and mixtures of different types of polyethylene (for example LDPE/HDPE), may also be used. Also useful are copolymers of monoolefins and diolefines with each other or with other vinyl monomers, such as, for example, ethylene/propylene, LLDPE and its mixtures with LDPE, propylene/butene-1, ethylene/hexene, ethylene/ethylpentene, ethylene/heptene, ethylene/octene, propylene/isobutylene, ethylene/butane-l, propylene/butadiene, isobutylene/isoprene, ethylene/alkyl acrylates, ethylene/alkyl methacrylates, ethylene/vinyl acetate (EVA) or ethylene/acrylic acid copolymers (EAA) and their salts (ionomers) and terpolymers of ethylene with propylene and a diene, such as hexadiene, dicyclopentadiene or ethylidene-norbornene; as well as mixtures of such copolymers and their mixtures with polymers mentioned above, for example polypropylene/ethylene-propylene-copolymers, LDPE/EVA, LDPE/EAA, LLDPE/EVA and LLDPE/EAA.

Thermoplastic polymers may also include styrenic polymers, such as polystyrene, poly-(p-methylstyrene), poly (α-methylstyrene), copolymers of styrene or α-methylstyrene with dienes or acrylic derivatives, such as, for example, styrene/butadiene, styrene/acrylonitrile, styrene/alkyl methacrylate, styrene/maleic anhydride, styrene/butadiene/ethylacrylate/styrene/ acrylonitrile/methylacrylate; mixtures of high impact strength from styrene copolymers and another polymers, such as, for example, from a polyacrylate, a diene polymer or an ethylene/propylene/diene terpolymer; and block copolymers of styrene, such as, for example, styrene/butadiene/styrene, styrene/isoprene/styrene, styrene/ethylene/butylene/styrene or styrene/ethylene/propylene styrene. Styrenic polymers may additionally or alternatively include graft copolymers of styrene or alphamethylstyrene such as, for example, styrene on polybutadiene, styrene on polybutadiene-styrene or polybutadiene-acrylonitrile; styrene and acrylonitrile (or methacrylonitrile) on polybutadiene and copolymers thereof; styrene and maleic anhydride or maleimide on polybutadiene; styrene, acrylonitrile and maleic anhydride or malemide on polybutadiene; styrene, acrylonitrile and methyl methacrylate on polybutadiene, styrene and alkyl acrylates or methacrylates on polybutadiene, styrene and acrylonitrile on ethylene/propylene/diene terpolymers, styrene and acrylonitrile on polyacrylates or polymethacrylates, styrene and acrylonitrile on acrylate/butadiene copolymers, as well as mixtures of with the styrenic copolymers indicated above.

Nitrile polymers are also useful in the polymer composition of the invention. These include homopolymers and copolymers of acrylonitrile and its analogs, such as polymethacrylonitrile, polyacrylonitrile, acrylonitrile/butadiene polymers, acrylonitrile/alkyl acrylate polymers, acrylonitrile/alkyl methacrylate/butadiene polymers, and various ABS compositions as referred to above in regard to styrenics.

Polymers based on acrylic acids, such as acrylic acid, methacrylic acid, methyl methacrylic acid and ethacrylic acid and esters thereof may also be used. Such polymers include polymethylmethacrylate, and ABS-type graft copolymers wherein all or part of the acrylonitrile-type monomer has been replaced by an acrylic acid ester or an acrylic acid amide. Polymers including other acrylic-type monomers, such as acrolein, methacrolein, acrylamide and methacrylamide may also be used.

Halogen-containing polymers may also be useful. These include resins such as polychloroprene, epichlorohydrin homo-and copolymers, polyvinyl chloride, polyvinyl bromide, polyvinyl fluoride, polyvinylidene chloride, chlorinated polyethylene, chlorinated polypropylene, florinated polyvinylidene, brominated polyethylene, chlorinated rubber, vinyl chloride-vinylacetate copolymers, vinyl chloride-ethylene copolymer, vinyl chloride-propylene copolymer, vinyl chloride-styrene copolymers, vinyl chloride-isobutylene copolymer, vinyl chloride-vinylidene chloride copolymer, vinyl chloride-styrene-maleic anhydride tercopolymer, vinyl chloride-styreneacrylonitrile copolymer, vinyl chloride-butadiene copolymer, vinyl chloride-isoprene copolymer, vinyl chloride-chlorinated propylene copolymer, vinyl chloride-vinylidene chloride-vinyl acetate tercopolymer, vinyl chloride-acrylic acid ester copolymers, vinyl chloride-maleic acid ester copolymers, vinyl chloride-methacrylic acid ester copolymers, vinyl chloride-acrylonitrile copolymer and internally platicized polyvinyl chloride.

Other useful thermoplastic polymers include homopolymers and copolymers of cyclic ethers, such as polyalkylene glycols, polyethylene oxide, polypropylene oxide or copolymers thereof with bis-glycidyl ethers; polyacetals, such as polyoxymethylene and those polyoxymethlene which contain ethylene oxide as a comonomer; polyacetals modified with thermoplastic polyurethanes, acrylates or methacrylonitrile containing ABS; polyphenylene oxides and sulfides, and mixtures of polyphenylene oxides with polystyrene or polyamides; polycarbonates and polyester-carbonates; polysufones, polyethersulfones and polyetherketones; and polyesters which are derived from dicarboxylic acids and diols and/or from hydroxycarboxylic acids or the corresponding lactones, such as polyethylene terephthalate, polybutylene terephthalate, poly-1, 4-dimethylol-cyclohexane terephthalate, poly-2(2,2-4(4-hydroxyphenyl)-propane) terphthalate and polyhydroxybenzoates as well as block-copolyetheresters derived from polyethers having hydroxyl end groups.

Polyamides and copolyamides which are derived from diamines and dicarboxylic acids and/or from aminocarboxylic acids or the corresponding lactams, such as polyamide, 4, polyamide 6, polyamide 6/6, 6/10, 6/9, 6/12 and 4/6, polyamide 11, polyamide 12, aromatic polyamides obtained by condensation of m-xylene, diamine and adipic acid; polyamides prepared from hexamethylene diamine and isophthalic or/and terephthalic acid and optionally an elastomer as modifier, for example poly-2,4,4-trimethylhexamethylene terephthalamide or poly-m-phenylene isophthalamide may be useful. Further copolymers of the aforementioned polyamides with polyolefins, olefin copolymers, ionomers or chemically bonded or grafted elastomers; or with polyethers, such as for instance, with polyethylene glycol, polypropylene glycol or polytetramethylene glycols and polyamides or copolyamides modified with EPDM or ABS may be used.

Polyolefin, polyalkylene terephthalate, polyphenylene ether and styrenic resins, and mixtures thereof are more preferred, with polyethylene, polypropylene, polyethylene terephthalate, polyphenylene ether homopolymers and copolymers, polystyrene, high impact polystyrene, polycarbonates and ABS-type graft copolymers and mixtures thereof being particularly preferred.

Olefin polymers may be produced by polymerization of olefins in the presence of Ziegler-Natta catalysts optionally on supports such as but not limited to Mg Cl₂, chronium salts and complexes thereof, optionally supported on Silica or other materials. They may also be produced utilizing catalysts based on cyclapentadiene complexes of metals typically complexes of Ti and Zr.

The polyolefins may have amounts of residual catalysts present such as titanium trichloride supported on magnesium chloride carrier.

The present invention also involves a process for preparing stabilized thermoplastic compositions which involve the steps of a) forming free-flowing solid particulates from an admixture comprising a tetrahydroabietyl phosphite and a material selected from the group consisting of hindered phenolic compounds, hindered amine compounds and organic phosphites different from the tetrahydroabietyl phosphite wherein the material has a melting point of greater than 40°C, and then b) blending the particulates with a thermoplastic resin. The time between steps a and b may be an extended time period, for example, more than five days or more than 14 days, without losing the free-flowing character of the particulates formed in step a.

### EXAMPLES

### Example 1

Tris tetrahydroabietyl phosphite was prepared by transesterifying triphenyl phosphite with 10% excess Abitol® alcohol. A reactor was charged with 1204.5 g. Abitol® alcohol (3.3 mols), 310 g. triphenyl phosphite (1 mol) and 2 g. sodium methylate as catalyst. The reaction mixture was heated under an inert gas to 120°C and then a vacuum was gradually applied to remove the phenol produced in the reaction. Heating and application of vacuum were continued until reaching 195 - 200°C to less than 1 mm.Hg. during which time the last of the phenol, the excess Abitol® alcohol and the non-alcohol components of the Abitol® alcohol were removed, a total of 390 g. of distillate.

The residue was dissolved in n-heptane and filtered through a precoat of Celite. The reaction product was then stripped to 120°C @ < 1mm Hg. vacuum. Total recovery was 1100 g. or 98% of theoretical yield.

When this product was exposed to 80% relative humidity at ambient temperature, the weight gain was insignificant, thus indicating no hydrolysis. The acid value increased from 0.1 to 2 in a period of 3000 hours. For purposes of comparison, tristearyl phosphite, in a similar test, showed an acid value increase from 0.5 to 27.7 in 352 hours.

### Example 2

Bis (tetrahydroabietyl 2,4 di-tert-butyl phenyl) phosphite was prepared by first reacting 206 g. (1 mol) of 2,4 di-tert-butylphenyl phenol with 310 g. (1 mol) of triphenyl phosphite catalyzed with 2 g. of sodium methylate (or phenate) to obtain a nominal 2,4 di-tert-butylphenyl diphenyl phosphite. Phenol was distilled through a 20 cm. Raschig ring packed column to 150°C and 30 mm. The reaction terminates at 190°C at 4 mm after distilling the calculated 1 mol of phenol. The product mixture contained approximately 85% of the desired 2,4-di-tert-butylphenyl) diphenyl phosphite. The remainder was identified as being predominanatly a mixture of bis(2,4-di-tert-butylphenyl) phenyl phosphite and unreacted triphenyl phosphite.

300 g. (0.71 mol) of this crude nominal product was then reacted with 571 g. (1.56 mols) of Abitol® alcohol in a manner similar to Example 1, distilling off the phenol at a terminal condition of 200°C at less than 1 mm. The product was dissolved in 600 ml. of n-heptane and filtered through a Celite precoat to remove the catalyst residues and other solids. The solution was stripped to 205°C at less than 1 mm distilling off 71 g. of condensibles (boiling at above 50°C). 616.8 g. (95% of theoretical yield) of product was recovered as a pale yellow, extremely viscous, liquid material, or a cold flowing glasslike substance, which was determined by IR and elemental analysis to constitute the desired product. The acid number was determined to be less than 0.1 indicating very minimal amounts of acid products, such as those with a phosphorus acid moiety.

### Example 3

Ethylidene bis 2,4 di-tert-butyl phenol was reacted with PCl₃ to yield the cyclic chlorophosphite. The latter was then reacted with Abitol® alcohol in toluene using triethylamine as the acid acceptor to yield the nominal tetrahydroabietyl ethylidene bis 2,4-di-tert-butylphenyl cyclic phosphite ester. A high melting solid product was obtained after filtration of the amine and removal of the toluene.

### Example 4

Dichloro pentaerythritol diphosphite (1 mol) was reacted with 2.05 mol of Abitol® alcohol in toluene using 2.1 mol of triethyl amine as an acid acceptor. The very viscous liquid product, bis abietyl pentaerythritol diphosphite, was obtained after filtering the triethylamine hydrochloride and stripping the toluene.

Example A is a comparative example illustrating the loss of free-flowing character experienced by powdered tris(tetrahydioabietyl) phosphite. Tris(tetrahydroabietyl) phosphite is a sticky, soft glass-like substance at room temperature. An amount of tris (tetrahydroabietyl) phosphite was formed into a free flowing powder and was stored at room temperature. After two days the powder lost its free-flowing character, and after five days was largely coalesced.

Examples 5 - 14 illustrate the free-flowing solid phosphite compositions of the present invention.

Example 5 involved preparing an admixture comprising 50 weight percent tris (tetrahydroabietyl) phosphite based on the total weight of the admixture and 50 weight percent tetra bis(methylene-3-(3,5-di-t-butyl-4-hydroxyphenyl)-propionate methane (available from Ciba-Geigy Corp. under the trademark Irganox 1010) based on the total weight of the admixture. The admixture was then ground into powder form and stored and remained free-flowing after fourteen days.

Examples B and 6 - 14 set forth in Table 1 involved making an admixture of ingredients in the weight percents based on the total weight of the admixture, formed into flakes and stored. Example B is a comparative example and demonstrated that the tris (tetrahydroabietyl) phosphite when made into free-flowing flake form and stored for two days lost its free-flowing character. Examples 6 - 14 illustrate compositions of the present invention and were admixtures that were formed into flakes and stored and retained their free-flowing character for over 14 days.

Example C is a comparative example illustrating a blend that exhibited loss in free-flowing characteristics in 14 days.

Percents in the admixture column are in weight percent based on the total weight of the admixture.

**Table 1**

| Example | Admixture | Form | Retained Free-Flowing Character |
|---|---|---|---|
| 6 | 50% P1, 50% AO1 | Flake | Yes (>14 days) |
| 7 | 33% P1, 67% AO1 | Flake | Yes (>14 days) |
| 8 | 50% P1, 50% AO2 | Flake | Yes (>14 days) |
| 9 | 50% P1, 50% AO3 | Flake | Yes (>14 days) |
| 10 | 50% P1, 50% AO4 | Flake | Yes (>14 days) |
| 11 | 50% P1, 50% HA1 | Flake | Yes (>14 days) |
| 12 | 50% P1, 50% HA2 | Flake | Yes (>14 days) |
| 13 | 50% P1, 50% AO5 | Flake | Yes (>14 days) |
| 14 | 50% P1, 50% S1 | Flake | Yes (>14 days) |
| C | 50% P1, 50% N1 | Flake | No (>14 days) |

P1 is tris(tetrahydroabietyl) phosphite.

A01 is tetra (methylene-3-(3,5-di-t-butyl-4-hydroxyphenyl) propionate) methane, melting point 110 - 125°C, and has the structural formula: 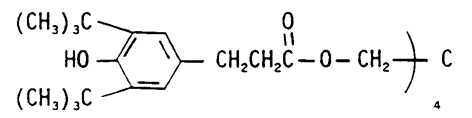
available from from Ciba-Geigy Corp. under the trademark Irganox 1010.

AO2 is available from Goodrich under the trademark Good-rite 3114 1,3,5-tris(3,5-di-t-butyl-4-hydroxybenzyl)isocyanurate having the structural formula: 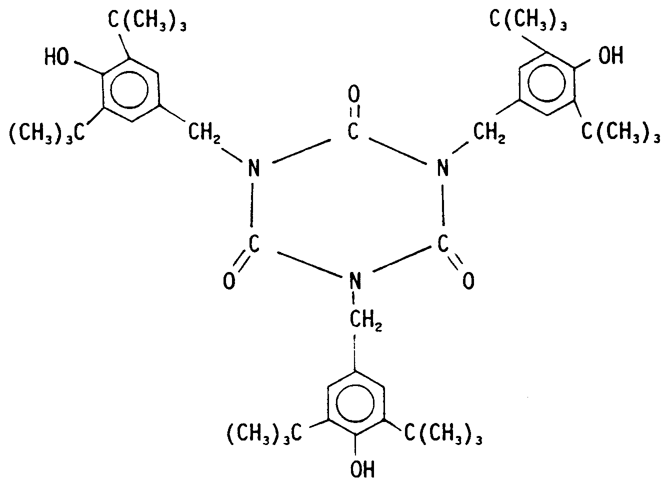
and has a melting point of 217 to 225°C.

A03 is available from Ethyl Corp. under the trademark Ethanox 330, and is 1,3,5-trimethyl-2,4,6-tris(3,5-di-t-butyl-4-hydroxybenzyl)-benzene and has the structural formula: 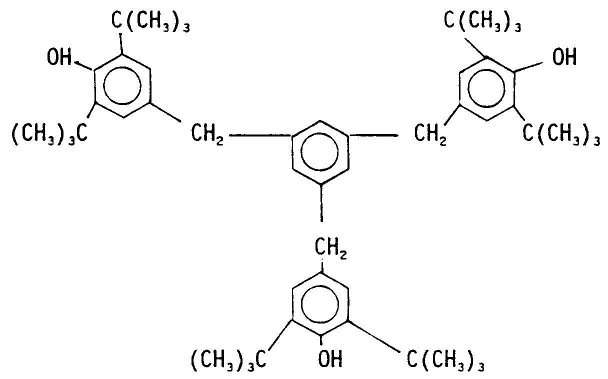
and has a melting point of 244°C.

A04 is available from Ciba-Geigy Corp. under the trademark Irganox 1076 and is octadecyl 3,5-di-t-butyl-4-hydroxy hydrocinnamate and has the structural formula: 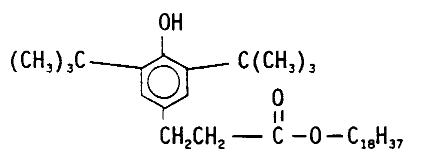
and has a melting point range of 49 to 54°C.

HA1 is available from Ciba-Geigy Corp. and is sold under the tradename Tinuvin 622 and is a hindered amine light stabilizer.

HA2 is available from Ciba-Geigy Corp. and is sold under the tradename Tinuvin 770 and is bis(2,2,6,6-tetramethyl-4-piperidyl)sebacate and has the structural formula:

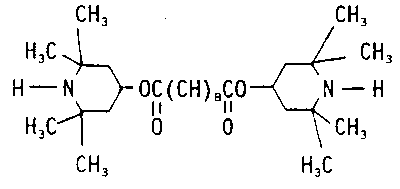

A05 is a phenolic antioxidant sold under the trademark Good-rite 3150 by Goodrich Corporation.

S1 is a solid phosphite sold under the trademark Ultranox 626 by GE Specialty Chemicals, Inc. and contains bis(2,4-di-tert-butylphenyl)pentaerythirtol diphosphite.

N1 is available from Uniroyal Corporation under the trademark Naugard 445 and is a substituted diphenyl amine.

## Claims

1. A free-flowing solid composition comprising: organophosphite particulates comprising an admixture of
(i) a tetrahydroabietyl organophosphite, and
(ii) a solid material having a melting point of at least 40°C and being selected from group consisting of hindered phenolic compounds, hindered amine compounds, and organic phosphite compounds provided that the material is not a tetrahydroabietyl organophosphite.

2. The composition of claim 1 wherein said tetrahydroabietyl organic phosphite ester is present in said admixture at a level of from 20 to 80 percent by weight based on the total weight of said admixture.

3. The composition of claim 2 wherein said material consists essentially of said tetrahydroabietyl organo phosphite and said solid material.

4. The composition of claim 3 wherein said material is a phenolic antioxidant having a number average molecular weight of greater than 500 grams per mol.

5. The composition of claim 2 wherein said material is a phenolic antioxidant selected from the group consisting of tetrakis(methylene (3,5-di-t-butyl-4-hydroxy hydrocinnamate)methane, 1,3,5-trimethyl-2,4-6-tris (3,5-di-t-butyl-4-hydroxybenzyl)-benzene, and octadecyl 3,5-di-t-butyl-4-hydroxy hydrocinnamate.

6. The composition of claim 2 wherein said material is present at a level of from between 20 and 80 percent by weight based on the total weight of said admixture.

7. The composition of claim 6 wherein said material is a piperidyl compound.

8. The composition of claim 1 wherein said admixture consists of said tetrahydroabietyl organophosphite ester and said material.

9. A process for preparing stabilized thermoplastic compositions, said process comprising the steps of:
a) forming free-flowing solid particulates comprising an admixture of tetrahydroabeityl phosphite and a material selected from the group consisting of hindered phenolic compounds and hindered amine compounds, said material having a melting point of greater than 40°C,
b) blending an effect amount of said particulates with a thermoplastic resin to enhance the thermal oxidative stability of said resin.

10. The process of claim 9 wherein said blending step is done more than 5 days after said forming step.

11. A free-flowing solid composition consisting essentially of:
organophosphite particulates consisting essentially of an admixture of
(i) a tetrahydroabietyl organophosphite, and
(ii) a solid material selected from group consisting of hindered phenolic compounds, hindered amine compounds, and organic phosphite compounds provided that the material is not a tetrahydroabietyl organophosphite.

12. A process for preparing stabilized thermoplastic compositions, said process consisting essentially of the steps of:
a) forming free-flowing solid particulates comprising an admixture of tetrahydroabeityl phosphite and a material selected from the group consisting of hindered phenolic compounds and hindered amine compounds, said material having a melting point of greater than 40°C,
b) blending an effect amount of said particulates with a thermoplastic resin to enhance the thermal oxidative stability of said resin.

13. The composition of Claim 2 wherein said solid material is a hindered phenolic compound.

14. The composition of Claim 2 wherein said solid material is a hindered amine.

15. The composition of Claim 2 wherein said solid material is an organic phosphite.
